# EUROPEAN PATENT APPLICATION

(11) **EP 4 563 258 A1**
(43) Date of publication of application: **04.06.2025**
(21) Application number: 22953265.0
(22) Date of filing: 07.11.2022
(51) Int. Cl.: B21D 13/02, B21D 11/08, H01M 8/0206

(54) **MULTI-STAGE PRESS-MOLDING METHOD FOR SHEET MATERIAL, AND MOLD DEVICE FOR MOLDING SHEET MATERIAL**

(30) Priority: 28.07.2022 KR 20220094157
(71) Applicant: Hyundai Steel Company, Incheon 22525 (KR)
(72) Inventor: JUNG, Young Ju, Asan-si Chungcheongnam-do 31502 (KR); KIM, Ki Joung, Dangjin-si Chungcheongnam-do 31733 (KR); JIN, Byeong Keuk, Pyeongtaek-si Gyeonggi-do 17867 (KR); HYUN, Joo Sik, Dangjin-si Chungcheongnam-do 31733 (KR)
(74) Representative: Viering, Jentschura & Partner mbB Patent- und Rechtsanwälte
(86) International application number: PCT/KR2022/017376
(87) International publication number: WO 2024/025040

(57) **Abstract**

The present disclosure provides a method and device for forming a plate to have a hat shape that protrudes from a bottom surface to a certain height and has a flat surface on an upper portion, and the method includes (S1) a step of forming the plate to have a protrusion shape having a curved surface on an upper portion such that a thickness reduction rate of the plate is uniform; (S2) a step of forming corner portions at both ends by moving the plate in a central portion to the left and right such that the protrusion portion has a flat surface; and (S3) a step of forming a flat surface by correcting protruding portions in the corner portions at both ends to make the protruding portions flat.

## Description

### Technical Field

The present disclosure relates to a multi-stage press forming method of a plate for a fuel cell, and more specifically, to a method of manufacturing hat shape by forming multi-stage press of a plate.

### Background

Currently, environmental and fuel efficiency regulations and safety standards are being strengthened in the automobile industry. Accordingly, an application rate of ultrahigh strength steel and hot stamping steel is steadily increasing, and the development of eco-friendly vehicles, such as hybrid vehicles, electric vehicles, and hydrogen fuel cell vehicles, is increasing.

Plates, each having a much thinner thickness (0.3 t or less) compared to a material used in the known vehicle body component, are being used as metal sheets used in hydrogen fuel cell vehicles among eco-friendly vehicles. When forming a plate by using such an ultra-thin material, the fracture resistance is low due to a thin thickness, and because press forming is performed by using a small curvature compared to vehicle body components, it is not easy to secure a uniform thickness reduction rate compared to general steel sheets. In addition, securing flat portions of a hat-shaped flow path shape is very important to improve fuel cell efficiency. In order to secure flat portions, the curvature of a flow path have to be small (0.1 to 0.3), but in a case where the curvature is small, when performing press forming, fracture occurs due to concentrated load and rapid increase in thickness reduction rate, and accordingly, manufacturing is not easy to be performed.

The conventional US registered patent US 9630229 describes a method of utilizing multi-stage molding (3-stage) to form a hat shape, but there is a limitation that it is difficult to apply when ductility (elongation rate) of a material is low.

### Disclosure

### Technical Problem

The present disclosure is intended to solve the conventional problems, and an object of the present disclosure is to provide a press forming method that uniformly forms a flat portion and has a uniform thickness reduction rate when manufacturing a hat shape of an ultra-thin material (0.3 mm or less). However, this task is an example, and the scope of the present disclosure is not limited thereto.

### Technical Solution

According to an aspect of the present disclosure, a multi-stage press forming method of a sheet material is provided. The method is a method of forming a plate to have a hat shape that protrudes from a bottom surface to a certain height and has a flat surface on an upper portion, and may include (S1) a step of forming the plate to have a protrusion shape having a curved surface on an upper portion such that a thickness reduction rate of the plate is uniform; (S2) a step of forming corner portions at both ends by moving the plate in a central portion to the left and right such that the protrusion portion has a flat surface; and (S3) a step of forming a flat surface by correcting protruding portions in the corner portions at both ends to make the protruding portions flat.

According to one embodiment, a step of setting a gap (P) of a hat shape that is uniformly formed may be further performed before the step (S1).

According to one embodiment, in the step (S1), a hat height (H1) of the protrusion portion protruding from a bottom surface may be 60 to 70% of a gap (P) of a hat shape.

According to one embodiment, in the step (S2), the corner portions at both ends may protrude upward compared to the central portion, and a protrusion step difference may be 0.5 to 1% of a thickness of the plate.

According to one embodiment, the protrusion step difference may be formed equally on both sides of the plate by an upper mold and a lower mold.

According to one embodiment, in the step (S2), a thickness of the plate located at the corner portions at both ends may be greater than a thickness of the plate in the central portion by 10 to 20%.

According to one embodiment, in the step (S2), a hat height (H2) may be formed to be greater than a hat height (H1) being formed in the step (S1) by 1 to 2%.

According to one embodiment, in the step (S3), a hat height (H3) may be formed to be less than a hat height (H2) being formed in the step (S2) by 1 to 2%.

According to one embodiment, in the step (S3), a flat surface may be formed on an upper surface of a plate by an upper mold, and a downwardly protruding area may be placed on a lower surface of the plate by a lower mold.

According to one embodiment, a step difference of the protruding area may be 0.1 to 0.5% of a thickness of the plate.

According to one embodiment, in the step (S3), the corner portions at both ends may have the same height as the central portion and have a thickness of the plate that is greater than a thickness of the plate in the central portion by 10 to 20%.

According to one embodiment, in the step (S3), pressure may be applied to the plate from a mold side having a shape of a final component.

According to one embodiment, a material of the plate may include metal.

According to one embodiment, in the step (S3), the flat surface may be formed to have a length of 25 to 30% of a gap of the hat shape.

According to another aspect of the present disclosure, a plate forming mold device is provided. The device may have an upper mold and a lower mold on both sides of the plate to be formed, the upper mold may have a flat portion shape in the center, and the lower mold may provide a space in which at least one area corresponding to the flat portion protrudes downward to accommodate a surplus portion of the plate.

According to one embodiment, the upper mold and the lower mold may be provided with at least one passage into which a pressure medium is insertable.

### Advantageous Effects

As described above, according to an embodiment of the present disclosure, when manufacturing a hat shape for a fuel cell by forming a plate, there is an effect of implementing a uniform flat portion and minimizing a thickness reduction rate.

Of course, the scope of the present disclosure is not limited by the effect.

### Description of Drawings

FIG. 1 illustrates views of a multi-stage press forming method of a plate step by step, according to an embodiment of the present disclosure.
FIG. 2 is a computer simulation result for predicting a thickness reduction rate when utilizing a forming method according to an embodiment of the present disclosure.
FIG. 3 is a photo illustrating a cross-section of a component manufactured by using a forming method according to an embodiment of the present disclosure.

### DETAILED DESCRIPTION

Hereinafter, various embodiments of the present disclosure will be described in detail with reference to the attached drawings. The embodiments of the present disclosure are provided to more completely describe the present disclosure to those skilled in the art, and the following embodiments may be modified in various other forms, and the scope of the present disclosure is not limited to the following embodiments. Rather, the embodiments are provided to more faithfully and completely convey the idea of the present disclosure to those skilled in the art. In addition, the thickness and size of each layer in the drawings are exaggerated for the sake of convenience and clarity of description.

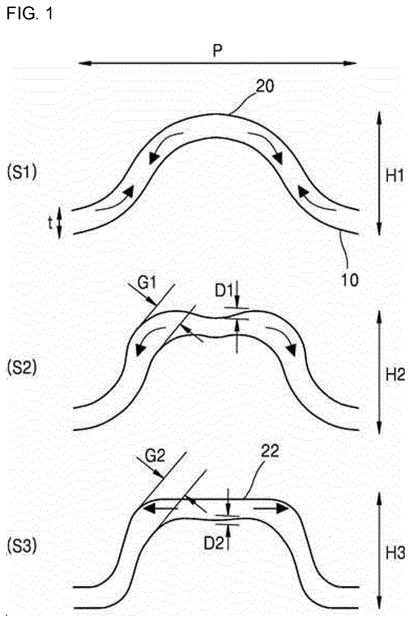

FIG. 1 illustrates views of a multi-stage press forming method of a plate step by step, according to an embodiment of the present disclosure.
a forming process in the present disclosure enables forming a hat-type component, and the hat-type component protrudes from an inlet (10) located on a bottom surface to a certain height and has a flat surface (22) on an upper portion (20). Before press forming, a gap (P) of a hat shape that is uniformly formed may be first set.

In the present disclosure, a plate that may be used in formation may be a representative metal material but is not limited in particular as long as the metal material may be formed plastically.

Hereinafter, a multi-stage press forming process of a plate, according to an embodiment of the present disclosure, will be described step by step.

(Step S1) a first step of a forming process is a step of forming an initial shape while minimizing the influence on ductility (elongation rate, %) of the plate by utilizing sine forming. It is preferable to use a mold having an overall curved shape such that a thickness reduction rate of a plate is uniform in the inlet (10) and upper portion (20) of a hat shape. The mold may be different from a mold having a shape of a final component in that the mode does not have a flat surface.

A hat height (H1) formed in step S1 may be 60 to 70% of the gap (P) of the previously set hat shape. when the height is over 70%, the risk of fracture increases due to extreme forming compared to the ductility of a material. When a defect such as fracture occurs, forming into a final component may be impossible.

(Step S2) a second step is a preliminary forming step of securing a flat portion of a hat shape by utilizing rippling forming. Corner portions at both ends are formed by moving a plate in the center of the upper portion (20) to the left and right such that a protruding curved surface formed in step S1 is flattened. In this case, the corner portions at both ends may protrude upward by a predetermined height compared to the center to form a curved shape. By providing a protrusion step difference (D1) to be 0.5 to 1% of a thickness (t) of a plate, a margin may be secured in advance to flatten a protruding portion formed by moving the plate to both ends in a subsequent S3 step. The protruding step difference (D1) may be applied equally by an upper mold and a lower mold to be formed equally at upper and lower corner portions of the plate.

In addition, a hat height (H2) from a bottom surface to a top portion may be formed by 1 to 2% higher than the hat height (H1) formed in step (S1), and accordingly, there is an effect of moving a material to both ends.

Meanwhile, it is preferable that a thickness (G1) of a plate located at the corner portions at both ends is greater by 10 to 20% than a thickness (t) of a plate in another area. This may be equally applied to a thickness G2 of a corner portion in step S3. Due to this, a portion where a thickness reduction rate increases may be minimized.

(Step S3) is a third step that is a process of correcting to flatten the material moved to both ends in the second step by utilizing flattening forming. The third step is a manufacturing step of finally implementing a hat shape by applying pressure to the plate from a mold side having a shape of a final component and perfectly implementing the hat shape by correcting a flat portion once more.

Specifically, an upper mold presses upper protrusion areas of the corner portions at both ends downward to straighten the upper protrusion areas, and a lower mold slightly raise lower surfaces of the corner portions at both ends upward. Therethrough, the corner portions at both ends may be placed at the same height as the center, but may be thicker than the thickness (t) of a plate by 10 to 20%.

A hat height (H3) may be formed to be lower than the hat height (H2) formed in step (S2) by 1 to 2%, and thus, a flattening effect may be maximized. In addition, as described above, it is preferable to minimize an increase in thickness reduction rate by increasing the thickness (t) of a material by 10 to 20%.

In a shape of the final component, a flat surface may be formed on an upper surface of the plate, but a downward protruding area may exist on an upper lower surface of the plate. Because lengths of the flat surfaces provided on upper and lower surfaces may not be equal to each other due to a structure of the hat shape in which an upper portion of the plate protrudes in a concave shape, a small protrusion step difference (D2) may be provided to the lower mold to obtain a desired shape. For example, the protrusion step difference (D2) may be 0.1 to 0.5% of the thickness (t) of a plate. Thereby, a flattening effect of the upper portion of the plate may be applied more strongly. Finally, a flat surface (22) may be formed to have a length of 25 to 30% compared wity the gap (P) of the hat shape.

A plate forming mold device provided to manufacture the components described above has an upper mold and a lower mold on both sides of the plate to be formed, the upper mold has a shape of a flat portion in the center, and the lower mold may provide a space in which one area corresponding to the flat portion protrudes downward to accommodate a surplus portion of the plate. The upper mold and the lower mold may each be provided with at least one passage into which a pressure medium may be inserted to pressurize the plate.

According to the embodiment of the present disclosure implemented as described above, it is possible to manufacture shapes that are difficult to manufacture by using the conventional methods due to low ductility (30% or less) of an ultra-thin plate for fuel cells.

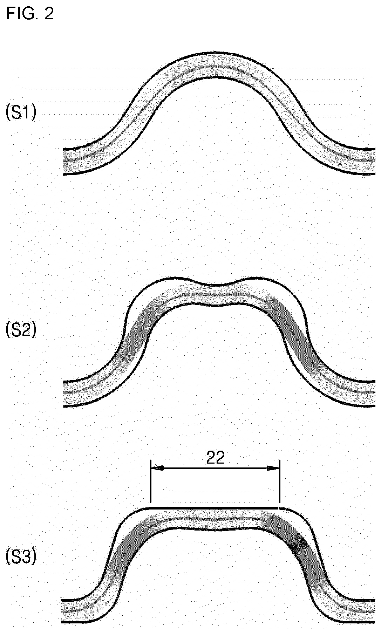

In order to verify this, a computer simulation was performed before forming according to the embodiment of the present disclosure and is illustrated in FIG. 2. As illustrated in FIG. 2, a hat shape having a thickness reduction rate of maximum 21% in (S1) sine forming, maximum 29% in (S2) rippling forming, and maximum 30% in (S3) flattening forming may be manufactured. Therefore, when utilizing a manufacturing method of the present disclosure, a hat shape, which may secure a flat surface (22) of 25 to 30% compared to the hat gap (P), may be manufactured.

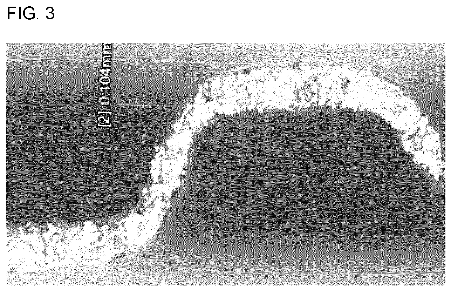

FIG. 3 is a photog showing a cross-section of a component manufactured by using the forming method according to an embodiment of the present disclosure. As a result of forming an actual hat-shaped component, it can be seen that a thickness reduction rate is maximum 30%, and that a hat shape may be manufactured regardless of the ductility of a material.

The present disclosure is described with reference to the embodiments illustrated in the drawings, which are merely exemplary, and those skilled in the art will understand that various modifications and equivalent other embodiments are possible from the embodiments. Therefore, the true technical protection scope of the present disclosure should be determined by the technical idea of the attached patent claims.

### Reference Signs List

10: inlet
20: upper portion
22: flat surface

### Industrial Applicability

The present disclosure may be utilized in a press forming field, particularly in a multi-stage press forming field and in a plate forming mold field, and the reliability and competitiveness of products may be improved.

## Claims

1. A multi-stage press forming method of a plate for forming the plate to have a hat shape that protrudes from a bottom surface to a certain height and has a flat surface on an upper portion, the multi-stage press forming method of the plate comprising:
(S1) a step of forming the plate to have a protrusion shape having a curved surface on an upper portion such that a thickness reduction rate of the plate is uniform;
(S2) a step of forming corner portions at both ends by moving the plate in a central portion to the left and right such that the protrusion portion has a flat surface; and
(S3) a step of forming a flat surface by correcting protruding portions in the corner portions at both ends to make the protruding portions flat..

2. The multi-stage press forming method of the plate of claim 1, wherein
a step of setting a gap (P) of a hat shape that is uniformly formed is further performed before the step (S1).

3. The multi-stage press forming method of the plate of claim 2, wherein,
in the step (S1), a hat height (H1) of the protrusion portion protruding from a bottom surface is 60 to 70% of a gap (P) of a hat shape.

4. The multi-stage press forming method of the plate of claim 1, wherein,
in the step (S2), the corner portions at both ends protrude upward compared to the central portion, and a protrusion step difference is 0.5 to 1% of a thickness of the plate.

5. The multi-stage press forming method of the plate of claim 4, wherein
the protrusion step difference is formed equally on both sides of the plate by an upper mold and a lower mold.

6. The multi-stage press forming method of the plate of claim 1, wherein,
in the step (S2), a thickness of the plate located at the corner portions at both ends is greater than a thickness of the plate in the central portion by 10 to 20%.

7. The multi-stage press forming method of the plate of claim 1, wherein,
in the step (S2), a hat height (H2) is formed to be greater than a hat height (H1) being formed in the step (S1) by 1 to 2%.

8. The multi-stage press forming method of the plate of claim 1, wherein,
in the step (S3), a hat height (H3) is formed to be less than a hat height (H2) being formed in the step (S2) by 1 to 2%.

9. The multi-stage press forming method of the plate of claim 1, wherein,
in the step (S3), a flat surface is formed on an upper surface of a plate by an upper mold, and a downwardly protruding area is placed on a lower surface of the plate by a lower mold.

10. The multi-stage press forming method of the plate of claim 9, wherein
a step difference of the protruding area is 0.1 to 0.5% of a thickness of the plate.

11. The multi-stage press forming method of the plate of claim 1, wherein,
in the step (S3), the corner portions at both ends have the same height as the central portion and have a thickness of the plate that is greater than a thickness of the plate in the central portion by 10 to 20%.

12. The multi-stage press forming method of the plate of claim 1, wherein,
in the step (S3), pressure is applied to the plate from a mold side having a shape of a final component.

13. The multi-stage press forming method of the plate of claim 1, wherein
a material of the plate includes metal.

14. The multi-stage press forming method of the plate of claim 1, wherein,
in the step (S3), the flat surface is formed to have a length of 25 to 30% of a gap of the hat shape.

15. A plate forming mold device that forms the plate to have a hat shape that protrudes from a bottom surface to a certain height and has a flat surface on an upper portion, the plate forming mold device comprising:
an upper mold and a lower mold on both sides of the plate to be formed,
wherein the upper mold has a flat portion shape in the center, and
the lower mold provides a space in which at least one area corresponding to the flat portion protrudes downward to accommodate a surplus portion of the plate.

16. The plate forming mold device of claim 15, wherein
the upper mold and the lower mold are provided with at least one passage into which a pressure medium is insertable.
